# EUROPEAN PATENT SPECIFICATION

(11) **EP 2 261 095 B1**
(45) Date of publication and mention of the grant of the patent: **15.04.2015**
(21) Application number: 10165228.7
(22) Date of filing: 08.06.2010
(51) Int. Cl.: B60T 13/36, B60T 8/18, B60T 8/17, B60T 15/42

(54) **Braking device for multiple wagon vehicles, such as railway trains, kinked characteristic valve and method**
Bremsvorrichtung für mehrere Wagen, wie etwa Schienenzug, Ventil mit geknickter Kennlinie und Verfahren
Dispositif de freinage pour véhicules à plusieurs wagons, tels que des trains de chemin de fer, valve à caractéristique pliée et procédé

(30) Priority: 11.06.2009 CZ 20090380; 24.09.2009 CZ 20090628; 14.04.2010 DE 102010016438
(43) Date of publication of application: 15.12.2010
(73) Proprietor: Dako-CZ, a.s., 53843 Tremosnice (CZ)
(72) Inventor: Karfik, Frantisek, 19000 Praha 9 (CZ); Pechar, Stanislav, 53843 Tremosnice (CZ)
(74) Representative: Ruschke, Hans Edvard

(56) References cited:
- EP-A1- 0 652 147
- EP-A1- 0 734 926
- CZ-A3- 9 703 326
- DE-A1- 3 210 008
- FR-A- 1 334 337
- FR-A- 1 382 066
- FR-A1- 2 357 410
- FR-A5- 2 089 116
- IT-B- 1 031 196
- US-A- 3 510 172
- US-A- 3 771 836
- US-B1- 6 669 308

## Description

### Field of the invention

The subject of the invention is a braking system for a multiple wagon vehicle such as a railway train, particularly a freight train, including a valve device with a kinked characteristic, and a method of braking.

### Description of the prior art

Load controlled/load dependent pneumatic brake valves in railway wagons make it possible to adjust the braking force at each wagon in accordance with its mass/load and thereby achieve a braking effect that is as uniform as possible, regardless of the load. This enables the operation of trains at greater speeds. Also to operate at higher speeds. The braking force available must be overall greater. The braking force in wagons operated at higher speeds (120 km/hr. in SS braking mode) and therefore their braking capacity needs to be greater than in railway wagons operated with lower braking force and at lower speeds (100 km/hr. in S braking mode). The operating requirements for load controlled brake valves depending upon the requirements for braking intensity are defined by railway regulations.

In the braking operation of non-uniform trains consisting of both SS-mode railway wagons and S-mode wagons, particularly during extended braking on mountainous tracks with long descending sections, uneven thermal stress occurs in the wagon wheel-sets. The brakes of SS-mode wagons, because of their greater braking capacity, take on a greater proportion of the train total braking requirement than do the brakes of S-mode wagons. The result is overheating of the brakes of the SS-mode wagons. In the braking systems of wagons operated in the SS-mode, it is therefore advisable to use a valve device, i.e. to reduce the outlet pressure into the brake cylinder during lower brake demands for partial brake operation (generally to maintain the same train speed during descents), and thereby also the braking force, so that the braking capacity of those wagons is reduced to the level of the braking capacity of S-mode wagons. This is a well-known principle, which is also used in road and agricultural vehicles where it is necessary to distribute the braking load between axels that may have different braking capacities.

In addition, where more intensive braking is required, the valve system must permit smooth transition in the brakes of the SS-mode wagons to their unreduced (original) braking effect. Thus when there is a need for full or rapid-acting (emergency) braking, the valve system must permit free passage of unreduced air pressure into the brake cylinders of the wagon.

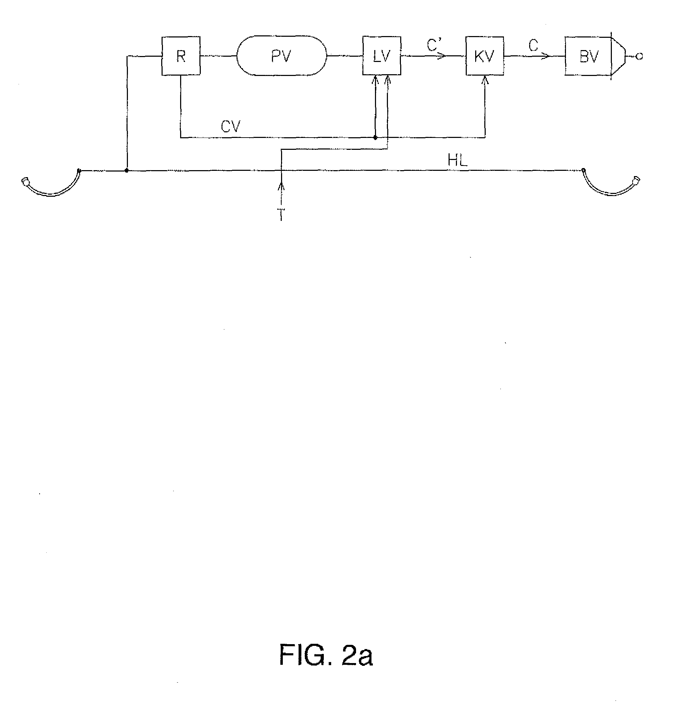

This is achieved using a supplementary valve with the so-called "kinked" characteristic. The kinked characteristic valve (KV) controls pressure C (pressure into the brake cylinder) both depending upon a supply pressure C', which is the outlet pressure of the load dependent valve LV, and upon the controlling pressure CV from the brake distributor R (see Fig. 2a).

In a railway train, although each set of wheels has its own pneumatically operated brake set, all of the brakes along the train are controlled by air pressure in a line that runs the full length of the train. In accordance with a principle developed by George Westinghouse in the nineteenth century, the pressure in the main brake line is maintained as high pressure when braking is not required, but is reduced in pressure to apply the brakes. Such a system is fail-safe as damage to the brake line would cause a loss of pressure and immediate application of the brakes all along the train. At each brake set a valve known as the distributor converts a drop in pressure in the main train brake line (HL) to an increase in the braking pressure CV to be applied to the brake cylinders. The distributor also ensures that a reservoir PV of compressed air is maintained at full train brake line (HL) pressure. The compressed air in this reservoir provides the energy supply for the operation of the brakes. In its simplest form the distributor R at each brake set allows compressed air from the main train brake line (HL) into a reservoir. If however the pressure in the main train brake line drops, indicating that braking is required, the distributor disconnects the main train brake line from the reservoir and instead connects the reservoir to the brake cylinder. Generally speaking the output of the distributor CV is a pressure which is inversely proportioned to the pressure on the main train brake line (HL). This pressure CV therefore represents the degree of desired brake application. To ensure smooth operation the distributor also contains many pneumatic components including valves, pistons and chokes, details of which are well-known and not given in the present description.

To achieve the desired degree of brake application a pressure must be applied to the brake cylinders dependent on the loading of the individual wagon. To do this, the controlling pressure CV is fed to a load controlled valve LV, which in turn connects to the brake cylinder. In a multiple wagon vehicle such as a freight train it is possible that some of the wagons do not have a load-controlled valve, while others do. The result is that within the same vehicle (e.g. train) identically loaded trucks will be braking to different extents. This gives rise to the overheating discussed above. To solve this problem, each wagon with a load-controlled valve is also provided with a kinked characteristic valve. The function of this kinked characteristic valve is to regulate the braking pressure applied to the brake cylinders so that at low braking levels its rate of increase with respect to the degree of desired brake application (represented by the pressure CV) does not exceed a preset value. This preset value would typically be the rate of increase typical for wagons that do not have a load-controlled valve. This therefore prevents the wagon with load-controlled valves from taking more than its "fair share" of the braking requirements of the full vehicle. At higher braking requirements however, the kinked characteristic valve has no effect and full braking is available.

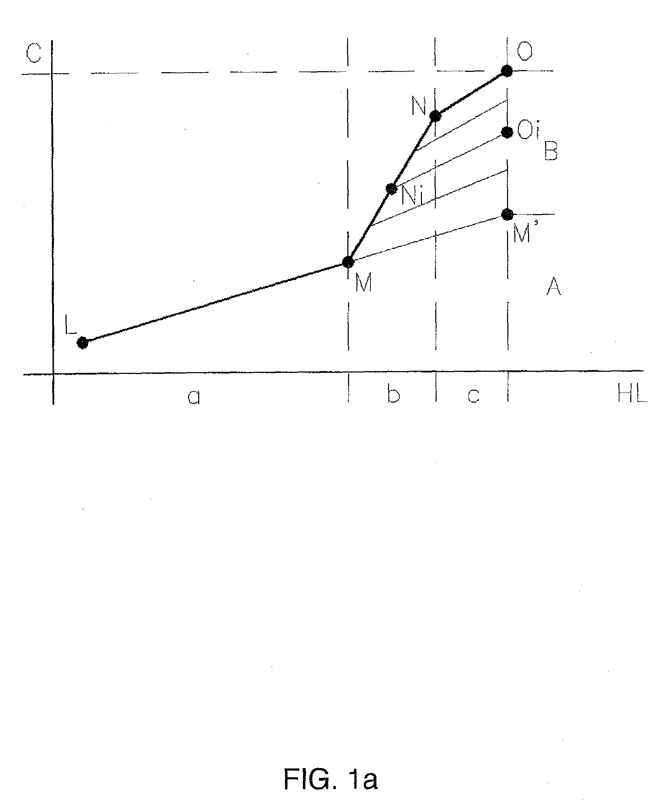

The characteristic of a typical kinked characteristic valve device KV for example as shown in CZ 293852, and sold as model DLV 3 by DAKO-CZ of Tremosnica, Czech Republic is illustrated in Fig. 1a. If the characteristic of the supply pressure C' from the load controlled valve LV (i.e. the outlet pressure of the load controlled valve LV) is lower than the characteristic of the brake pressure which corresponds to the braking of an S-mode wagon (line L-M-M' in Fig. 1a), the valve device KV permits smooth free passage of air from the load controlled brake valve LV into the brake cylinder BV (this involves the area A of wagons under low load for all intensive braking requirements in the areas a, b, c produced by a progressive drop in the brake control pressure HL, from left to right in figure 1a. Thus area a represents an area of low braking requirements, b an area of higher requirements and c the area of highest requirements). In Figure 1a the horizontal axis depicts HL with its highest pressure at the left hand end of the graph with decreasing pressure from left to right.

If the characteristic of supply pressure C' from the load controlled valve LV is higher than the characteristic of brake pressure of a wagon in the S-mode (line L-M-M' in Fig. 1a), the valve device KV follows, in braking, the kinked characteristics (see area B of higher wagon loadings in Fig. 1a). During low braking requirements (area a) the valve device KV follows the characteristic L - M, during higher braking requirements (area b) the valve device KV follows the characteristics M - Ni - Oi with smooth transition to the characteristic of pressure in the brake cylinder BV of the SS-mode wagon. At the moment when maximum supply pressure C' from the load controlled valve LV is achieved and when requirements for braking intensity are the highest (area c), the valve device KV becomes once more an open conduit for the supply pressure C' which becomes outlet pressure C (line N - O in Fig. 1a).

This existing technical solution for brakes in railway wagons operating in the SS brake mode can be described with the help of Fig. 2a. The brake distributor R is connected to the control pressure HL of the continuous train brake-line. The brake distributor R is also connected to the air reservoir PV. During a drop in the brake control pressure HL, the distributor R produces at its outlet, by inversion, an increase in pressure, which is the controlling pressure CV for the load controlled brake valve LV and also for the kinked characteristic valve device KV. The load controlled brake valve LV is typically powered by pressure from the air reservoir PV, although this need not necessarily be a direct connection (it could via the CV line). At the same time, the load controlled valve LV is regulated in relation to the wagon load by the further controlling air pressure T.

Many different load controlled valves are known and can be used in the prior art type arrangements. All have in common an input for a pressure representing the desired degree of braking required. This is the control pressure CV from the distributor. All have an output for connection to the brake cylinder and on which appears a pressure that comprises the input pressure multiplied by a factor proportional to measured load. The multiplication function may be achieved stepwise or proportionally. Stepwise multipliers, typically switch the input pressure to different area diaphragms arranged in a stack of a proportioning valve depending on the measured load, see for example DE 2730701. Proportional multipliers typically move the fulcrum of a lever / seesaw beam in line with the poppet of a proportioning valve, see for example CH 594520.

In figure 2a the outlet pressure C' from the load controlled brake valve LV is the input (supply) pressure of the valve device KV with kinked characteristic. The outlet pressure C from the valve device KV with kinked characteristic is then the supply pressure of the brake cylinder BV.

Known kinked characteristic valves KV (for example as described in patent documents GB 1196988, US 3771836, DE 19511432 and CZ 293852) use a comparison between the controlling pressure CV and a spring force or reference pressure to define the start of the transition area on the kinked characteristic (area b on Fig. 1a). Although this results in the outlet pressure C following the line of the kinked characteristic (KV) both in partial and complete operational braking, the system suffers from the disadvantage that the charging of the brake cylinders BV lags behind the drop in the pressure HL in the main brake-line (Fig. 2a). This is caused by reaction time delays in the development of the controlling pressure CV due to chokes, orifices and other components in the distributor R. The braking distance is thereby extended in the operation of integral and mixed trains with rail wagons in the SS braking mode with known kinked characteristic valve KV and controlling pressure CV, whilst each such extension of the braking distance can represent a safety risk.

A further safety risk arises from the way in which the reference pressure is developed. In some known arrangements such as shown in DE 19511432 and CZ 293852, it is produced using a pressure- limiting regulator fed from the controlling pressure CV from the distributor. Should that regulator seal fail, the reference pressure would equal the controlling pressure and the kinked characteristic valve would not sense the rise in the controlling pressure CV and would not transition to full braking capacity.

### Summary of the invention

According to a first aspect the invention provides a vehicle braking system for an individual wagon of a multiple wagon vehicle having a main brake control fluid pressure line which connects the wagons of the multiple wagon vehicle to control their brakes, the system comprising:
a main control pressure conduit (HL) for connecting the braking system of the individual wagon to the main brake control fluid pressure line of the multiple wagon vehicle;
a distributor (R) having an inlet connected to a main control pressure conduit (HL) and produced a pressure on an outlet which pressure (CV) corresponds to the degree of desired brake application, whereby a reduction of pressure in the main control pressure conduit (HL) results in an increase in the outlet pressure (CV) representing the degree of desired brake application;
a load controlled valve (LV) connected to the output of the distributor and to an input representing the loading of the wagon (T) and arranged to produce an output braking pressure (C'), which for any degree of desired brake application (CV) is greater for greater wagon loads;
a brake cylinder (BV) connected to the output of the load controlled valve (LV) to receive the output braking pressure and apply a corresponding braking force to the wagon;
a kinked characteristic valve (KV) disposed between the load controlled valve (LV) and the brake cylinder (BV) and connected also to the distributor output (CV), said kinked characteristic valve (KV) being arranged such that in a first operational state it regulates the pressure received by the brake cylinder (BV) with respect to the pressure output (CV) of the distributor (R) to a preset ratio, and in a second operational state it provides an unimpeded connection between the load controlled valve (LV) and the brake cylinder (BV);
**characterized in that** the kinked characteristic valve (KV) has a further input (I) connected to the main control pressure conduit (HL), and is arranged such that said kinked characteristic valve (KV) operates in the first operational state when the pressure in the main control pressure conduit (HL) is above a given threshold, and transitions continuously from said first operational state towards said second operational state when the pressure in the main control pressure conduit (HL) decreases below the threshold.

In an embodiment there is provided a braking device for railway wagons, particularly freight wagons, comprising a valve device with kinked characteristic connected to a load controlled brake valve, where the controlling pressure of the load controlled brake valve consists of the outlet pressure of a distributor which is connected both to the source of the brake control pressure and to an air reservoir, and where the load controlled brake valve is further connected to the air reservoir and to a source of further controlling air pressure proportional to the size of the load of the railway wagon, whilst the outlet pressure of the load controlled brake valve, depending upon the magnitude of the further controlling air pressure according to the size of the load of the railway wagon, creates the supply pressure of the valve device with kinked characteristic. The valve device with kinked characteristic is connected by its controlling pressure entry to the source of the brake control pressure and by its outlet to the brake cylinder of the railway wagon. The source of the controlling pressure of the valve device with kinked characteristic can be the brake control pressure in the main brake-line. The valve device can be connected at the same time, by its further controlling entry, to the source of controlling pressure of the load controlled brake valve.

According to a second aspect of the present invention there is provided a kinked characteristic valve device (KV) for the brakes of an individual wagon of a multiple wagon vehicle, particularly a railway freight wagon, said valve comprising associated filling and exhaust valves (1, 2) for transforming entry supply pressure (C') to the valve device (KV) into outlet pressure (C), where the filling valve (1) and exhaust valve (2) work alternately in opposite directions under the action of a differential piston (4) and of an equalizing piston (7) arranged behind the differential piston (4) on a common axis, where the equalizing piston (7) is pre-stressed by a force in the direction of opening of the filling valve (1), and where the outlet pressure (C) from the valve device (KV) acts on one of the two operating surfaces of the differential piston (4) in the direction to close the filling valve (1), while the other of the two operating surfaces is exposed to the effect of a controlling pressure (CV) from the brake distributor (R); **characterised in that** the surface (6) of the equalizing piston (7) on the side of the differential piston (4) is exposed against its pre-stressing to control pressure (HL) from the main train brake-line, whereby a drop in control pressure (HL) in the main train brake-line causes the differential piston (4) to move in the direction which opens the filling valve (1).

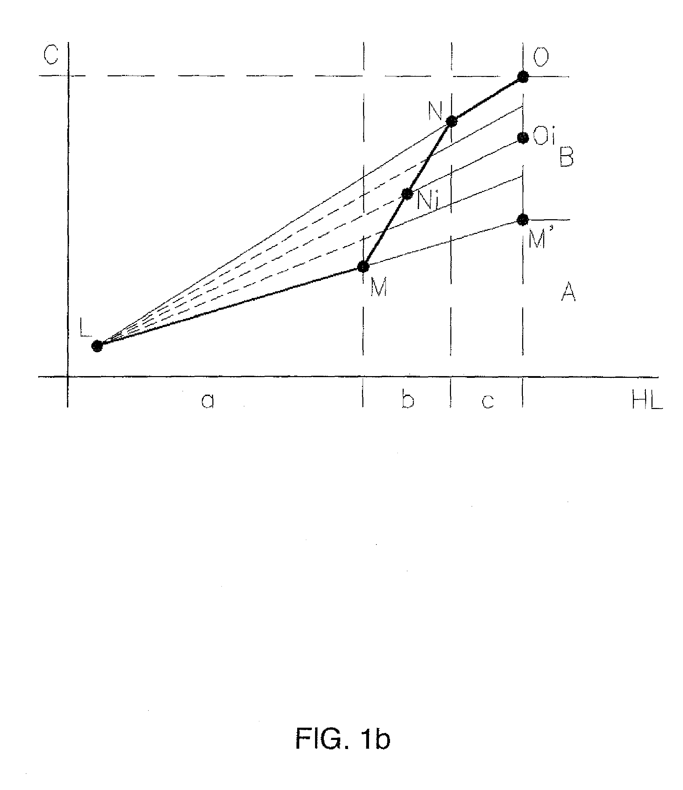

In a preferred embodiment the area of the surface of the differential piston (4) that is exposed to the controlling pressure (CV) is smaller than the area of the differential piston acted upon by the outlet pressure (C). The actual ratio of the areas is not important as long as the entire arrangement gives rise to the characteristic shown in figure 1b. Thus any change in ratio can be compensated for in the gain of the load controlled valve or the pressure output levels of the distributor. If however the kinked characteristic valve KV is being used as a retrofit on an existing system, these other factors cannot be changed and the output pressure side of the distributor piston must have larger area.

One embodiment is particularly suitable for use as a retrofit. In this embodiment various connections to the valve are made as ports in two surfaces of the valve housing. The entry supply pressure (C') is applied to a first port (D) in the housing, the controlling pressure (CV) is applied to a second port (E) in the housing, and the outlet pressure (C) appears at a third port (F) in the housing. A first face of the housing includes the second and third ports (E, F), for connection of the valve to a bulkhead containing connections to a brake distributor (R) to supply the controlling pressure (CV) to the second port (E) and to a brake cylinder to receive the outlet pressure from the third port (F). A second face of the housing includes the first port (D) and a fourth port (G), wherein the fourth port (G) is connected within the housing to the second port (E), for connection of the valve to a load dependent valve (LV) to supply the entry supply pressure (C') to the first port (D) and receive the controlling pressure (CV) from the second port (E) and supply the entry supply pressure (C') to the first port (D). In this arrangement the layout of the ports on the first face is a mirror image of the layout of the ports on the second face, such that if the valve were to be removed or absent from the bulkhead and the load dependent valve (LV) bolted directly in its place, the controlling pressure (CV) from the distributor would be still connected to the load dependent valve (LV) and the entry supply pressure (C') would connect directly to the brake cylinder (BV). In this embodiment the housing has a fifth port (H) to supply the main brake control line pressure (HL) which is preferably situated on the same surface as the second and third ports (E, F).

Pre-stressing of the equalizing piston can be created by a compression spring bearing against the body of the valve device through an adjusting screw, or by compressed air. The pre-stress of this compression spring or compressed air can be set at a suitable force, preferably corresponding to the brake control pressure of 4.2 bars, acting on the equalizing piston.

Another aspect of the present invention provides a method of operating the brakes of individual wagons of a multiple wagon vehicle, particularly a railway freight wagon, comprising: feeding a brake controlling pressure (CV) derived by inversion from a main brake control line pressure (HL) of the vehicle to one control inlet (I) of a kinked characteristic valve device (KV); feeding an outlet pressure (C') of a load controlled brake valve (LV) which is equal to the controlling pressure (CV) multiplied by a factor proportional to the size of the load of the wagon, to a supply inlet of the kinked characteristic valve device (KV); feeding the main brake control line pressure (HL) of the vehicle to a further control inlet (II) of the kinked characteristic valve device (KV); sensing when the pressure on the second control inlet is above a threshold, and generating in response at an output of the valve a pressure which is a fixed proportion of the brake control pressure (CV) on the first control inlet; sensing when the pressure on the second control inlet is below the threshold, and allowing in response the outlet pressure (C') of the load controlled brake valve (LV) applied to the supply inlet to pass through the kinked characteristic valve device (KV) to the output; and feeding the output of the kinked characteristic valve device (KV) to a brake cylinder (BV) of the wagon.

A yet further aspect comprises a method of controlling a valve device with kinked characteristic for brake valves of railway wagons, particularly freight wagons, where the supply pressure of the kinked characteristic valve device consists of the outlet pressure of a load-controlled valve, which is dependent upon the magnitude of the controlling pressure from the brake distributor connected to the source of the brake control pressure, and dependent upon the magnitude of the further controlling air pressure which is proportional to the size of the load of the railway wagon. In this aspect the kinked characteristic valve device is controlled by the controlling pressure created by the brake control pressure whilst the outlet pressure of the kinked characteristic valve device constitutes the entry pressure into the brake cylinder of the railway wagon. Alternatively the kinked characteristic valve device may be controlled by the controlling pressure created by the brake control pressure, and at the same time by the controlling pressure of the load controlled brake valve.

The advantage of the various arrangements described herein lies particularly in the shortening of the distance required for braking in integral and mixed trains with railway wagons designed for operation at high speeds with a load above the volume of pressure into the brake cylinder set for operation of railway wagons at normal speeds. During full operational braking, rapid or emergency braking, the change or drop in the brake control pressure is considerably more intensive than in the case of the time controlled and thus protracted development of control pressure from the brake distributor. In such a case the output pressure from the kinked characteristic valve does not follow the line of the kinked characteristic L, M, N, O in figure 1b, but jumps to the corresponding unkinked characteristic L, Ni, Oi, according to the input supply pressure from the load controlled brake valve. Thus in this situation the valve switches from being a proportional pressure regulator to being an open conduit.

Another advantage is that the device is inherently more fail-safe, as the pre-stressing bias urges the filling valve open, thus reducing the chance that the system will fail into a state in which it creates a reduction in the brake operating pressure.

### Brief description of the drawings

Fig. 1a shows the kinked characteristic of dependence of the outlet air pressure of the valve device (pressure into the brake cylinder) on the brake control pressure prior art systems;
Fig. 1b shows the kinked characteristic of dependence of the outlet air pressure of the valve device (pressure into the brake cylinder) on the brake control pressure in systems according to the present invention;
Fig. 2a shows the connection arrangement of a prior art braking system such as produces the characteristic of figure 1a;
Fig. 2b shows the connection arrangement of a system in accordance with the invention;
Fig. 3 is a diagram of the valve device for use in the invention, shown in the operational state when the brake control pressure is in area b on Fig. 1b during higher braking requirements;
Fig. 4 shows an example of a specific kinked characteristic valve device according to Fig. 3, and compatible with braking systems manufactured by DAKO-CZ of Tremosnica, Czech Republic.
Figure 5 shows an alternative kinked characteristic valve constructed as an intermediate flange, which can be interposed between a load controlled valve and a bulkhead, manifold, or flange containing ports leading respectively to a distributor valve and a brake cylinder.

### Detailed description of the drawings

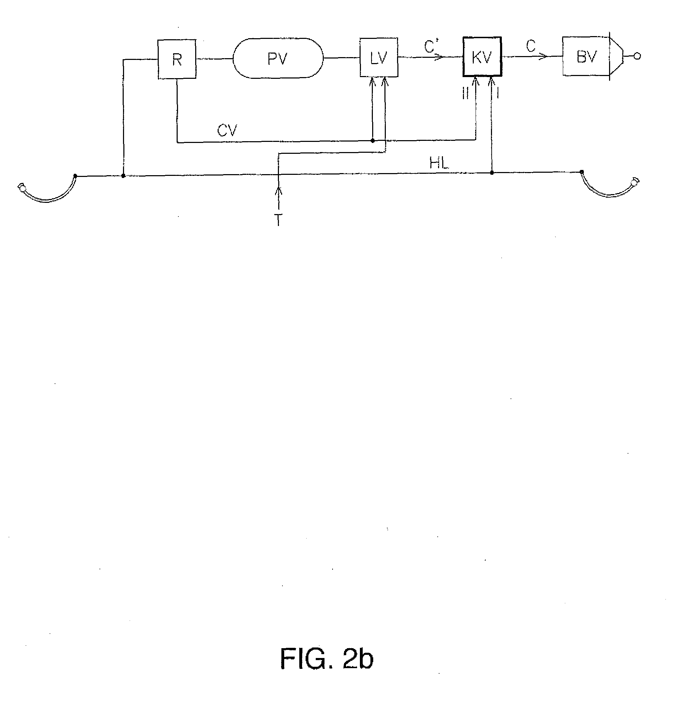

On typical railway wagons with self-acting brakes, the source of the brake control pressure HL consists of the main line with variable air control pressure, which is connected to the brake distributor R (see Fig. 2b). The distributor R is also connected to the air reservoir PV. During a drop in the brake control pressure HL, the distributor R creates an inverse build-up of pressure CV, which is also the controlling air pressure for the load controlled brake valve LV. The load controlled brake valve LV is supplied with pressure from the air reservoir PV. At the same time the load controlled brake valve LV is controlled in relation to the wagon load by the further controlling air pressure T which is proportional to the load of the wagon. The outlet air pressure C' from the load controlled brake valve LV is the entry air pressure of the kinked characteristic valve KV.

The brake control pressure HL from the main brake-line (controlling entry 1 in Fig. 2b) and the outlet pressure from the brake distributor R (further controlling entry II), which is also the controlling pressure for the load controlled brake valve LV, are simultaneously the controlling air pressures for the kinked characteristic valve KV. The controlling pressure, which is the brake control pressure HL from the main brake-line, is here used to create the kinked characteristic in the area M - N (see Fig. 1b), whilst the outlet pressure from the distributor R creates a reduced characteristic in the area L - M on Fig. 1b. The outlet pressure C from the kinked characteristic valve KV with is then the entry supply pressure of the brake cylinder BV.

During full operation and rapid-acting braking, the drop in the brake control pressure HL is substantially faster than the development, time-controlled by nozzles, of the controlling pressure CV from the distributor R. Because the brake control pressure HL is also the controlling air pressure for the kinked characteristic valve KV, the faster drop in control pressure HL in the main brake-line results in faster transfer of outlet pressure C from the kinked characteristic valve KV in full braking than would be the case with control by the outlet controlling pressure CV from the distributor R. The outlet pressures C from the kinked characteristic valve KV then follow the characteristics L, Ni, Oi to L, N, O in Fig. 1b, which are not limited by the kinked lines L, M, Ni, Oi to L, M, N, O. During rapid-acting full operation or braking at brake control pressure HL ≤ 4.2 bars, the device does not follow the kinked characteristic, but permits the filling of the brake cylinder BV with the outlet pressure C of the valve device KV without limitation by the kinked characteristic which would otherwise extend the braking distance.

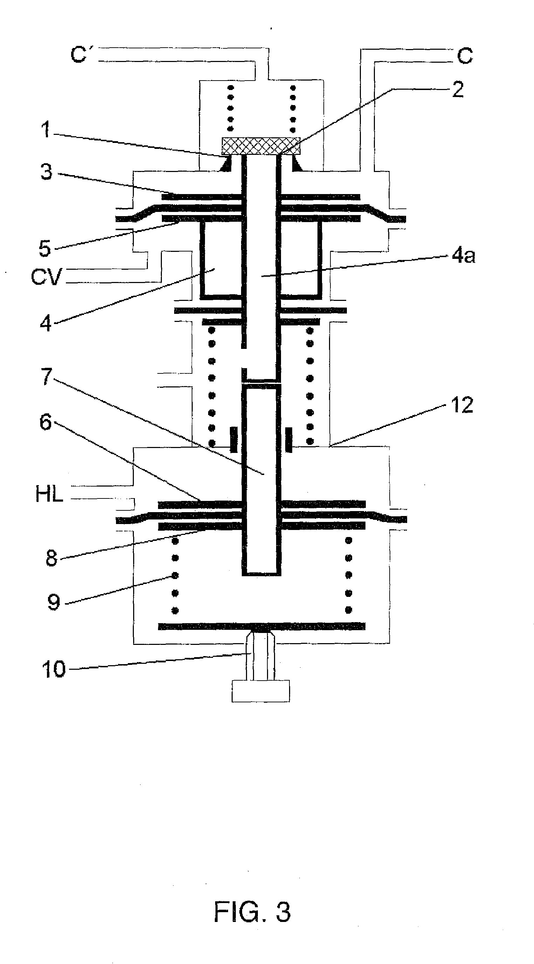

Fig. 3 shows the valve device KV in operational state, where the brake control pressure HL is in the area b on Fig. 1b during higher braking requirements. The valve device KV comprises associated filling valve 1 and exhaust valve 2, differential piston 4, equalizing piston 7 and spring 9. The associated filling valve 1 and exhaust valve 2 consist of one flap and an inner and outer seat, the inner seat consisting of the hollow part 4a (the hollow piston rod) of the differential piston 4. The equalizing piston 7 bears against the opposite side of the hollow part 4a of the differential piston 4. From one side (on the surface 6 on the side of the differential piston 4) the brake control pressure HL and, on the opposite surface 8, the compression spring 9 act upon this equalizing piston 7. The force of the spring 9 can be set by an adjusting screw 10.

The outlet pressure C of the valve device KV which is connected to the brake cylinder BV acts upon one surface of the differential piston 4 (the bigger operating surface 3 on the side of the filling and the exhaust valves 1, 2) and the controlling pressure CV from the distributor R acts upon its opposite surface (the smaller operating surface 5 on the side of the equalizing piston 7). The filling valve 1 of the valve device KV is supplied by the entry pressure C', which is the outlet air pressure from the load controlled brake valve LV.

The differential piston 4, which controls with its hollow part 4a the filling valve 1 and the exhaust valve 2, limits the entry pressure C' in the area a (see Fig. 1b) of low braking requirements (when the brake control pressure HL is in the area of 5.0 to 4.2 bars) so that the outlet pressure C of the valve device KV does not exceed the characteristic L - M in the area a. Under the equalizing piston 7, the spring 9 is set at a force corresponding to a brake control pressure HL of 4.2 bars. But because the brake control pressure HL is greater than 4.2 bars, the equalizing piston 7 is pushed away from the differential piston 4 and does not operate with it. In this condition the equalizing piston 7 does not touch the hollow part 4a of the differential piston 4.

The differential piston 4 operates so as to limit the entry pressure C' from the load controlled brake valve LV to a value defined by the ratio of the areas of the two faces of the differential piston and the controlling pressure CV from the distributor R. The outlet pressure C follows the characteristic L-M of the kinked characteristic (see Fig. 1b). Note that the characteristic L-M is not load dependent.

During higher braking requirements in the area b according to Fig. 1b, which corresponds to a drop in the brake control pressure HL to a value in the area of 4.2 to 3.8 bars, the differential piston 4 limits the outlet pressure C in relation to the entry supply pressure C'. Because the force of the spring 9 begins to exceed the force of the brake control pressure HL of 4.2 bars, the equalizing piston 7 provides additional force to the hollow part 4a of the differential piston 4 and thus begins to create the transitional area b (see Fig. 1b) of the valve device KV. The closer the brake control pressure HL comes to 3.8 bars, the greater is the force of the equalizing piston 7, which acts upon the differential piston 4 and the transitional area b of the kinked characteristic approaches the point N.

During highest braking requirements in the area c (Fig. 1b), when the brake control pressure HL is less than 3.8 bars, the filling valve 1 of the valve device KV is completely open. This is caused by the fact that the force of the differential piston 4 together with the additional force of the equalizing piston 7 is greater than the force of the outlet pressure C on the bigger operating surface 3 of the differential piston 4 on the side of the filling and the exhaust valves 1, 2. The valve device KV is completely open and lets through unlimited entry pressure C' from the load controlled valve LV into the brake cylinder BV. The entry pressure C' is thus equal to the outlet pressure C of the valve device KV.

During intensive braking operation with a single reduction of brake control pressure HL under 4.2 bars, during full braking operation and during rapid-acting braking, a rapid and considerable drop in brake control pressure HL occurs, which is usually faster than the development of the controlling pressure CV controlled by the nozzles of the brake distributor R. The consequence of this rapid drop in brake control pressure HL on the surface 6 of the equalizing piston 7 on the side of the differential piston 4 is that the spring 9, which acts upon the opposite surface 8 of the equalizing piston 7, more rapidly provides sufficiently great force acting upon the differential piston 4, and the filling valve 1 opens completely. The outlet pressure C of the valve device KV into the brake cylinder BV is equal at that moment to the entry supply pressure C' from the heavy-duty valve LV. The pressure in the brake cylinder BV then develops according to the unkinked or unlimited characteristic, since the valve device KV is then open allowing passage (see broken line L - Ni on Fig. 1b).

For simplicity, the preceding description of the operation of the valve device KV can be summarized as follows. During low braking, when the brake control pressure HL is between 5.0 and 4.2 bars, only the differential piston 4 operates, which reduces the outlet pressure C in the course of the characteristic in the area a (Fig. 1b). The equalizing piston 7 is not in operation since the force of the spring 9 is less than the force of the brake control pressure HL (5.0 to 4.2 bars) on the surface 6 of the equalizing piston 7 on the side of the differential piston 4. It is true that during higher braking requirements with a brake control pressure HL in the range of 4.2 to 3.8 bars, the differential piston 4 further reduces the outlet pressure C of the valve device KV, however the equalizing piston 7 supplies additional force to the differential piston 4 and thus creates the transitional part b of the kinked characteristic. During a drop in the brake control pressure HL under 3.8 bars, the preponderance of the resulting force of the spring 9 in association with the differential piston 4 is so great that the valve device KV allows passage for the entry supply pressure C' from the heavy-duty valve LV and that pressure then acts directly as pressure in the brake cylinder BV (area c of the characteristic of the valve device KV).

The spring 9 is set at the equilibrium of the equalizing piston 7, where a brake control pressure HL of 4.2 bars (at the boundary between the areas a and b) acts upon the surface 6 of the equalizing piston 7 on the side of the differential piston 4. There is therefore no need for any additional device (pressure regulator) to create a fixed magnitude of force on the equalizing piston 7, acting on the hollow part 4a of the differential piston 4.

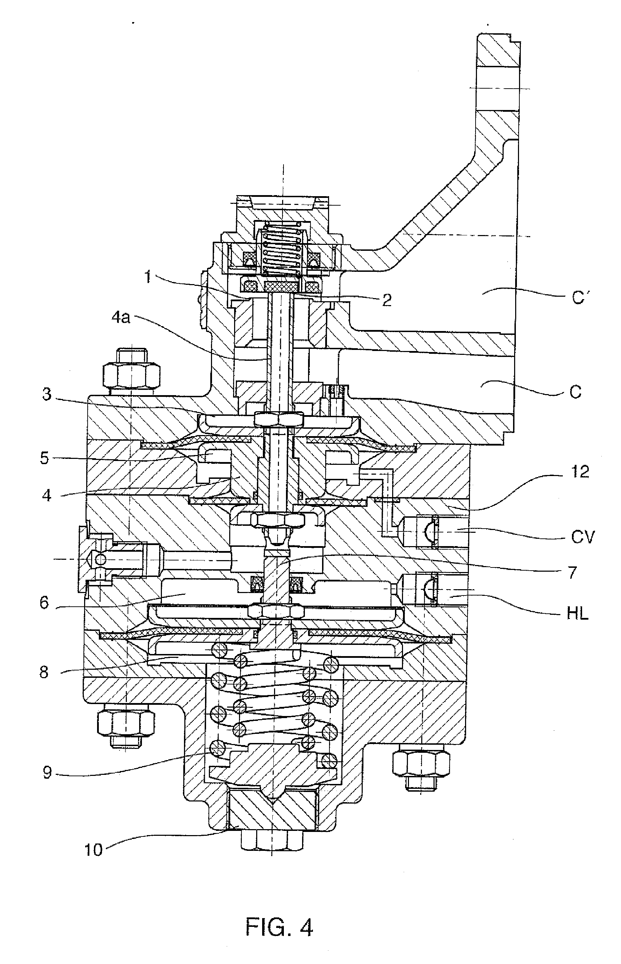

The stabilizing spring 11, which with its opposite side bears against the differential piston 4, exerting its force in the direction of opening the filling valve 1, can rest against the body 12 of the valve device KV. Fig. 4 shows an example of a specific embodiment of the valve device according to Fig. 3, the indication of its individual parts and areas corresponds to Fig. 3, as does its description and operation.

The distributor R, reservoir PV, load dependent valve LV and brake cylinder BV of the braking system set out in figure 2b can be the same as in the prior art system of Fig. 2a, and described above.

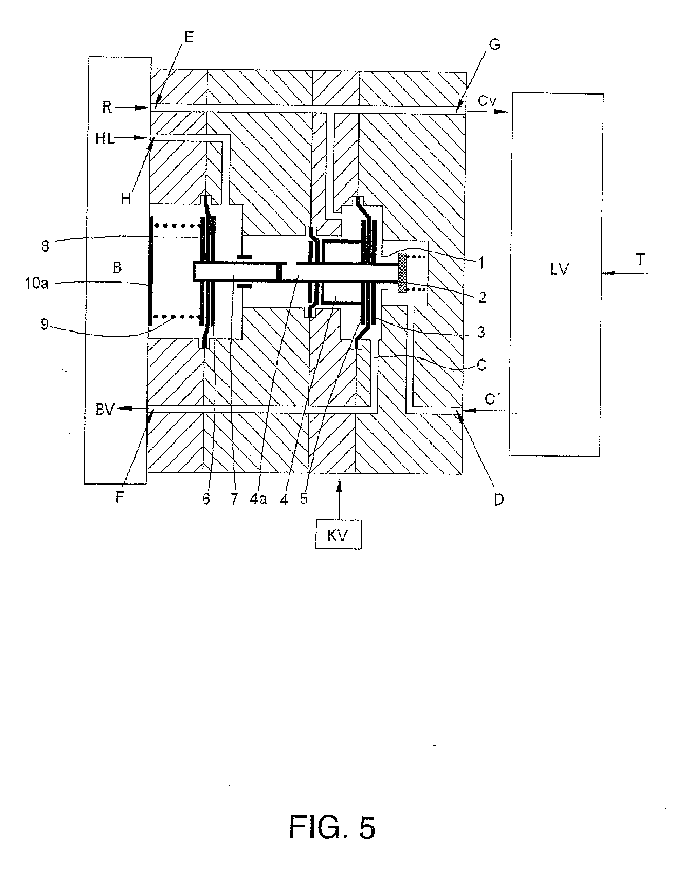

An alternative kinked characteristic valve device can be constructed as illustrated in figure 5. This valve device KV can be used as a retro-fit for certain SS braking systems produced by various manufacturers. In figure 5 the same reference numerals have been used for corresponding parts as in Figures 3 and 4 and the operation is the same unless stated to the contrary below. In the arrangement of figure 5 the valve with the kinked characteristic KV is formed as an intermediate flange between a bulkhead containing conduits leading from the distributor R and a conduit leading to a brake cylinder BV with no kinked characteristic KV valve fitted on SS braking systems a load controlled valve LV is bolted onto the bulkhead B so that the output conduit of a distributor R aligns with an inlet of the load dependent valve. Depending on the pressure T from load sensors, a braking pressure is generated within the load dependent valve LV and is fed back into the bulkhead, and from there fed to the brake cylinder BV. To obtain the braking characteristic shown in figure 1b the kinked characteristic valve KV of figure 5 is inserted between the bulkhead B and the load dependent valve LV. To do this all that is necessary is to unbolt the load dependent valve LV, secure the kinked characteristic valve KV in its place with the sense input of the kinked characteristic valve aligned with the output of the distributor R so that the controlling pressure CV enters the kinked characteristic valve KV and impinges on the left hand surface of the differential piston 5, as shown in figure 5. The output of the kinked characteristic valve KV connects in place of the output of the load dependent valve and feeds output pressure C to the brake cylinder BV. Next, the load dependent valve LV is bolted onto the exposed face of the kinked characteristic valve KV opposite the bulkhead B. The kinked characteristic valve KV has a port leading directly from the bulkhead, which conducts the output pressure CV of the distributor R through to the load dependent valve LV inlet. The outlet of the load dependent valve forms the supply pressure C' for the kinked characteristic valve KV and aligns directly with the supply inlet to the kinked characteristic valve KV. Thus, instead of leading directly to the brake cylinder, the outlet of the load dependent valve LV now passes through the kinked characteristic valve KV. The kinked characteristic valve KV shown in figure 5 therefore is a retrofit unit, which can be bolted between a load dependent valve and a bulkhead containing conduits leading from the distributor R and to the brake cylinder B, without modification of any of the conduits except the provision of an extra connection to the main brake line HL. Thus in this arrangement the valve housing has two faces with the layout of the two ports on one face being a mirror image of the two ports on the other face. The control pressure CV can pass straight through from one face to the other and the supply port C' on one face corresponds to the outlet port C on the other face. A fifth port, which is provided to connect to the main brake line HL may be on the same face as the ports leading from the distributor R and the port leading to the brake cylinder (i.e. the left hand side in figure 5). This will depend on whether a suitable outlet port exists in the bulkhead.

Also in connection with figure 5, it is noted that the spring 9 that acts on the left hand side of the equalizing piston 7 is immediately adjacent to the bulkhead to which the valve is bolted. Accordingly, there is no simple way in which the spring force can be adjusted as is done with the bolt 10 in the figure 4 arrangement. Adjustment however may be done by the selection of the correct thickness shim 10a when the kinked characteristic valve KV is first installed. Correct operation of the equalizing piston 7 can readily be tested by applying a test pressure to the right hand side of the equalizing piston in place of the main brake line pressure HL. The shim thickness would then be adjusted either by replacement, or by relative rotation of a pair of face-to-face snail cam disks (not shown). If face-to-face snail cam disks are used and the ports made slightly arcuate enough adjustment could be achieved by rotation of the entire valve on the bulkhead.

In any case the spring should be selected and/or adjusted so that the equalizing piston 7 moves when the main brake line pressure HL applied to its right hand side (as shown in Figure 5) drops to below 4.2 bars.

The same adjustment could alternatively be achieved by small axial displacement of the seats of the inlet valve 1, achievable by adjusting screws (not shown).

Preferably the fluid used in the braking systems discussed above is compressed air. It is however envisaged that the same principles and structures can be applied to hydraulic systems, and to systems using a gaseous fluid other than air.

### Industrial use

The present invention can be used for the load controlled brake valves of pneumatic brakes of railway wagons for the purpose of reducing the thermal stress of the wheels of the wagons and makes possible a reduction of the braking distance, both in integral and mixed trains with railway wagons designed for operation at high speeds in the S S braking mode, and a general increase in safety in the operation of railway trains when there is a need for full operation and rapid-acting emergency braking. The invention is not restricted to use with railway trains. It also has application to multiple axel, road and agricultural vehicles, provided they use the main brake line system in which a reduction in pressure causes the braking to be actuated. Other applications include factory conveyor systems with distributed braking.

### List of reference numerals

- R: brake distributor
- PV: air reservoir
- LV: load controlled brake valve (dependent upon the load)
- KV: kinked characteristic valve device
- BV: brake cylinder
- HL: main train line brake control pressure
- C: outlet pressure of kinked characteristic valve device KV (pressure into brake cylinder BV)
- CV: controlling pressure (outlet pressure of brake distributor R)
- C': entry supply pressure of kinked characteristic valve KV (outlet pressure of load controlled brake valve LV)
- T: further controlling air pressure proportional to loading of railway wagon
- I: controlling entry of valve device with kinked characteristic
- II: further controlling entry of valve device with kinked characteristic
- a: area of low braking requirements
- b: area of higher braking requirements
- c: area of highest braking requirements
- A: area of railway wagon low loading characteristics
- B: area of railway wagon higher loading characteristics
- 1: filling valve
- 2: exhaust valve
- 3: bigger operating surface of differential piston on side of filling valve and exhaust valve
- 4: differential piston
- 4a: hollow part of differential piston
- 5: smaller operating surface of differential piston on side of equalizing piston
- 6: surface of equalizing piston on side of differential piston
- 7: equalizing piston
- 8: surface of equalizing piston on side of spring
- 9: spring
- 10: adjusting screw of spring
- 10a: adjustment shim
- 12: body of valve device

## Claims

1. A vehicle braking system for an individual wagon of a multiple wagon vehicle having a main brake control fluid pressure line which connects the wagons of the multiple wagon vehicle to control their brakes, the system comprising:
a main control pressure conduit (HL) for connecting the braking system of the individual wagon to the main brake control fluid pressure line of the multiple wagon vehicle;
a distributor (R) having an inlet connected to a main control pressure conduit (HL) and produced a pressure on an outlet which pressure (CV) corresponds to the degree of desired brake application, whereby a reduction of pressure in the main control pressure conduit (HL) results in an increase in the outlet pressure (CV) representing the degree of desired brake application;
a load controlled valve (LV) connected to the output of the distributor and to an input representing the loading of the wagon (T) and arranged to produce an output braking pressure (C'), which for any degree of desired brake application (CV) is greater for greater wagon loads;
a brake cylinder (BV) connected to the output of the load controlled valve (LV) to receive the output braking pressure and apply a corresponding braking force to the wagon;
a kinked characteristic valve (KV) disposed between the load controlled valve (LV) and the brake cylinder (BV) and connected also to the distributor output (CV), said kinked characteristic valve (KV) being arranged such that in a first operational state it regulates the pressure received by the brake cylinder (BV) with respect to the pressure output (CV) of the distributor (R) to a preset ratio, and in a second operational state it provides an unimpeded connection between the load controlled valve (LV) and the brake cylinder (BV);
**characterized in that** the kinked characteristic valve (KV) has a further input (I) connected to the main control pressure conduit (HL), and is arranged such that said kinked characteristic valve (KV) operates in the first operational state when the pressure in the main control pressure conduit (HL) is above a given threshold, and transitions continuously from said first operational state towards said second operational state when the pressure in the main control pressure conduit (HL) decreases below the threshold.

2. A braking system according to claim 1 wherein the fluid is compressed air and there is further provided an air reservoir (PV) connected to the distributor (R) and to the load controlled valve (LV) to receive compressed air from the main control pressure conduit (HL) when braking is not required, and to supply compressed air to the load controlled valve (LV) when braking is required.

3. A braking system according to claim 1 or 2 wherein the input representing the loading of the wagon (T) is a compressed air line leading from a load sensor or to air springs in the wagon suspension system.

4. A kinked characteristic valve device (KV) for the brakes of an individual wagon of a multiple wagon vehicle, particularly a railway freight wagons, said valve comprising associated filling and exhaust valves (1, 2) for transforming entry supply pressure (C') to the valve device (KV) into outlet pressure (C), where the filling valve (1) and exhaust valve (2) work alternately in opposite directions under the action of a differential piston (4) and of an equalizing piston (7) arranged behind the differential piston (4) on a common axis, where the equalizing piston (7) is pre-stressed by a force in the direction of opening of the filling valve (1), and where the outlet pressure (C) from the valve device (KV) acts on one of the two operating surfaces of the differential piston (4) in the direction to close the filling valve (1), while the other of the two operating surfaces is exposed to the effect of a controlling pressure (CV) from the brake distributor (R);
**characterised in that** the surface (6) of the equalizing piston (7) on the side of the differential piston (4) is exposed against its pre-stressing to control pressure (HL) from the main train brake-line, whereby a drop in control pressure (HL) in the main train brake-line causes the differential piston (4) to move in the direction which opens the filling valve (1).

5. A valve device according to claim 4 wherein the area of the surface of the differential piston (4) that is exposed to the controlling pressure (CV) is smaller than the area of the differential piston acted upon by the outlet pressure (C).

6. A valve device according to claim 4 or 5, wherein the pre-stressing of the equalizing piston (7) is created by a compression spring (9).

7. A valve device according to claim 6, wherein compression spring bears against a body (12) of the valve device (KV) through an adjusting screw (10).

8. A valve device according to any of claims 4 to 7 wherein the valve includes a housing,
the entry supply pressure (C') is applied to a first port (D) in the housing, the controlling pressure (CV) is applied to a second port (E) in the housing, and the outlet pressure (C) appears at a third port (F) in the housing;
the housing has a first face including the second and third ports (E, F), for connection of the valve to a bulkhead containing connections to a brake distributor (R) to supply the controlling pressure (CV) to the second port (E) and to a brake cylincler to receive the outlet pressure from the third port (F);
the housing has a second face including the first port (D) and fourth port (G) wherein the fourth port (G) is connected within the housing to the second port (E), for connection of the valve to a load dependent valve (LV) to supply the entry supply pressure (C') to the first port (D) and receive the controlling pressure (CV) from the second port (E) and supply the entry supply pressure (C') to the first port (D);
the layout of the ports on the first face is a mirror image of the layout of the ports on the second face, such that if the valve were removed from the bulkhead and the load dependent valve (LV) bolted directly in its place, the controlling pressure (CV) from the distributor would be still connect to the load dependent valve (LV) and the entry supply pressure (C') would connect to the brake cylinder (BV);
the housing has a fifth port (H) to supply the main brake control line pressure (HL).

9. A method of operating the brakes of individual wagons of a multiple wagon vehicle, particularly a railway freight wagon, comprising:
feeding a brake controlling pressure (CV) derived by inversion from a main brake control line pressure (HL) of the vehicle to one control inlet (I) of a kinked characteristic valve device (KV);
feeding an outlet pressure (C') of a load controlled brake valve (LV) which is equal to the controlling pressure (CV) multiplied by a factor proportional to the size of the load of the wagon, to a supply inlet of the kinked characteristic valve device (KV);
feeding the main brake control line pressure (HL) of the vehicle to a further control inlet (II) of the kinked characteristic valve device (KV);
sensing when the pressure on the second control inlet is above a threshold, and generating in response at an output of the valve a pressure which is a fixed proportion of the brake control pressure (CV) on the first control inlet;
sensing when the pressure on the second control inlet is below the threshold, and allowing in response the outlet pressure (C') of the load controlled brake valve (LV) applied to the supply inlet to pass through the kinked characteristic valve device (KV) to the output; and
feeding the output of the kinked characteristic valve device (KV) to a brake cylinder (BV) of the wagon.

10. A method according to claim 9 further comprising providing a continuous transition below the threshold between the output of the valve being a pressure which is a fixed proportion of the brake control pressure (CV) on the first control inlet and a pressure equal to the outlet pressure (C') of the load controlled brake valve (LV) applied to the supply inlet.

## Patentansprüche

1. Fahrzeugbremssystem für einen einzelnen Wagen eines Mehr-Wagen-Fahrzeugs mit einer Fluid-Hauptbrems-Steuerdruckleitung, die die Wagen des Mehr-Wagen-Fahrzeugs verbindet, um deren Bremsen zu steuern, welches System aufweist:
eine Fluid-Haupt-Steuerdruckleitung (HL), mittels der das Bremssystem des einzelnen Wagens mit der Fluid-Hauptbrems-Steuerdruckleitung verbindbar ist;
einen Verteiler (R), der mit einem Zulauf an die Fluid-Haupt-Bremssteuerdruckleitung (HL) verbunden ist und an einem Ausgang einen Druck (CV) erzeugt, der der Stärke einer Soll-Bremsung entspricht, wobei ein Druckabfall in der Fluid-Haupt-Steuerdruckleitung (HL) einen der Soll-Bremsung entsprechenden Anstieg des Ausgangdrucks (CV) ergibt;
ein lastgesteuertes Ventil (LV), das an den Ablauf des Verteilers und an einen Zulauf angeschlossen ist, der der Belastung des Wagens (T) entspricht, und angeordnet ist, einen Ausgangsbremsdruck (C) zu erzeugen, der für eine beliebige Soll-Bremsung (CV) für höhere Wagenlasten höher ist;
einen Bremszylinder (BV), der an den Ablauf des lastgesteuerten Ventils (LV) angeschlossen ist, um den Ausgangsbremsdruck aufzunehmen und den Wagen mit einer entsprechenden Bremskraft zu beaufschlagen; und
ein Ventil (KV) mit geknickte Kennlinie zwischen dem lastgesteuerten Ventil (LV) und dem Bremszylinder (BV), das auch an den Ablauf des Verteilers (CV) angeschlossen, wobei das Ventil (KV) mit geknickter Kennlinie so angeordnet ist, dass es in einem ersten Betriebszustand den vom Bremszylinder (BV) aufgenommenen Druck bezüglich des Ablaufdrucks (CV) des Verteilers (R) auf ein voreingestelltes Verhältnis regelt und in einem zweiten Betriebszustand einen unbehinderten Durchgang zwischen dem lastgesteuerten Ventil (LV) und dem Bremszylinder (BV) herstellt;
**dadurch gekennzeichnet, dass**
das Ventil (KV) mit geknickter Kennlinie einen weiteren Zulauf (I) hat, der an die Fluid-Haupt-Steuerdruckleitung (HL) angeschlossen und so angeordnet ist, dass es in dem ersten Betriebszustand arbeitet, wenn der Druck in der Fluid-Haupt-Steuerdruckleitung (HL) über einem gegebenen Schwellenwert liegt, und stetig aus dem ersten in einen zweiten Betriebszustand übergeht, wenn der Druck in der Fluid-Haupt-Steuerdruckleitung (HL) unter den Schwellenwert abfällt.

2. Bremssystem nach Anspruch 1, bei dem das Fluid Druckluft ist und weiterhin ein Luftreservoir (PV) vorgesehen ist, das an den Verteiler (R) und das lastgesteuerte Ventil (LV) angeschlossen ist, um, wenn nicht gebremst werden soll, aus der Haupt-Steuerdruckleitung (HL) Druckluft aufzunehmen und, wenn gebremst werden soll, dem lastgesteuerten Ventil (LV) Druckluft zuzuführen.

3. Bremssystem nach Anspruch 1 oder 2, bei dem die die Belastung des Wagens (T) darstellende Eingabegröße die Last einer Druckluftleitung ist, die von einem Lastsensor her oder zu Luftfedern in der Radaufhängung führt.

4. Ventilanordnung (KV) mit geknickter Kennlinie für die Bremsen eines einzelnen Wagens eines Mehr-Wagen-Fahrzeugs, insbesondere eines Eisenbahn-Güterzugs, mit einander zugeordnetem Füll- und Ablassventil (1, 2) zum Übertragen des Eingangsversorgungsdrucks (C') zur Ventilanordnung (KV) zum Ausgangsdruck (C), wobei das Füllventil (1) und das Ablassventil (2) unter der Einwirkung eines Differenzialkolbens (4) und eines hinter letzterem auf einer gemeinsamen Achse angeordneten Ausgleichskolbens (7) abwechselnd in entgegengesetzter Richtung arbeiten, wobei der Ausgleichskolben (7) von einer Kraft in Öffnungsrichtung des Füllventils (1) vorbeaufschlagt wird und wobei der Ausgangsdruck (C) aus der Ventilanordnung (KV) auf eine der beiden Arbeitsflächen des Differenzialkolbens (4) in der Schließrichtung des Ventils (1) wirkt, während auf die andere der beiden Arbeitsflächen ein Steuerdruck (CV) aus dem Bremsverteiler (R) wirkt;
**dadurch gekennzeichnet, dass** die Fläche (6) des Ausgleichskolbens (7) auf der Seite des Differenzialkolbens (4) gegen die Vorlast dem Steuerdruck (HL) aus der Haupt-Zugbremsleitung ausgesetzt ist, wobei ein Abfall des Steuerdrucks (HL) in der Haupt-Zugbremsleitung bewirkt, dass der Differenzialkolben (4) sich in der Öffnungsrichtung des Füllventils (1) bewegt.

5. Ventilanordnung nach Anspruch 4, bei der der mit dem Steuerdruck (CV) beaufschlagte Flächeninhalt des Differenzialkolbens (4) kleiner ist als der vom Auslassdruck (C) beaufschlagte Flächeninhalt des Differenzialkolbens.

6. Ventilanordnung nach Anspruch 4 oder 5, bei der die Vorbeaufschlagung des Ausgleichskolbens (7) durch eine Druckfeder (9) erfolgt.

7. Ventilanordnung nach Anspruch 6, bei der die Druckfeder über eine Nachstellschraube (10) auf dem Körper (12) der Ventilanordnung (KV) aufliegt.

8. Ventilanordnung nach einem der Ansprüche 4 bis 7, bei der das Ventil ein Gehäuse aufweist;
der Eingangs-Versorgungsdruck (C') an einen ersten Anschluss (D) im Gehäuse und der Steuerdruck (CV) an einen zweiten Anschluss (E) im Gehäuse gelegt sind und der Auslassdruck (C) an einem dritten Anschluss (F) im Gehäuse erscheint;
das Gehäuse eine erste Fläche mit dem zweiten und dritten Anschluss (E, F) zur Verbindung des Ventils mit einem Schott aufweist, das Verbindungen zu einem Bremsverteiler (R) zur Zufuhr des Steuerdrucks (CV) zum zweiten Anschluss (E) und zu einem Bremszylinder enthält, um den Auslassdruck vom dritten Anschluss (F) zu übernehmen;
das Gehäuse eine zweite Fläche mit dem ersten Anschluss (D) und einem vierten Anschluss (G) aufweist, wobei der vierte Anschluss (G) im Gehäuse mit dem zweiten Anschluss (E) verbunden ist, um das Ventil mit einem lastabhängigen Ventil (LV) zu verbinden und so den Eingangsversorgungsdruck (C') dem ersten Anschluss (D) zuzuführen, den Steuerdruck (CV) aus dem zweiten Anschluss (E) zu übernehmen und den Anschluss (D) mit dem Eingangsversorgungsdruck (C') zu beaufschlagen;
die Anschlüsse in der ersten Fläche spiegelbildlich zu denen in der zweiten Fläche angeordnet sind derart, dass, falls das Ventil aus dem Schott entfernt und stattdessen das lastabhängige Ventil (LV) direkt eingeschraubt wird, der Steuerdruck (CV) aus dem Verteiler das lastabhängige Ventil (LV) und der Eingangsversorgungsdruck (C') den Bremszylinder (BV) immer noch beaufschlagen würden;
und
das Gehäuse einen fünften Anschluss (H) zur Zufuhr des Haupt-Bremsteuerleitungsdrucks (HL) enthält.

9. Verfahren zum Betreiben der Bremsen einzelner Wagen eines Mehr-Wagen-Fahrzeugs, insbesondere eines Eisenbahn-Güterzugs, das beinhaltet;
Zufuhr eines Bremssteuerdrucks (CV), der durch Invertieren eines Haupt-Bremssteuerleitungsdrucks (HL) des Fahrzeugs abgeleitet wurde, zu einem Steuereingang (I) einer Ventilanordnung (KV) mit geknickte Kennlinie;
Zufuhr eines Ausgangsdrucks (C') eines lastgesteuerten Bremsventils (LV), der gleich dem mit einem der Höhe der Wagenlast proportionalen Faktor multiplizierten Steuerdruck (CV) ist, zu einem Versorgungseinlass der Ventilanordnung (KV) mit geknickter Kennlinie;
Zufuhr des Haupt-Bremssteuerleitungsdrucks (HL) des Fahrzeugs zu einem weiteren Steuerzulauf (II) der Ventilanordnung (KV) mit geknickter Kennlinie;
das Erfassen eines über einem Schwellenwert liegenden Drucks am zweiten Steuerzulauf und hierauf reagierend das Erzeugen eines Drucks, der in einem festen Verhältnis zum Bremssteuerdruck (CV) in der ersten Steuerleitung steht, an einem Ausgang des Ventils;
das Erfassen eines Abfalls des Drucks am zweiten Steuereingang unter den Schwellenwert und hierauf reagierend das Zulassen, dass der an den Versorgungseinlass gelegte Auslassdruck (C') des lastgesteuerten Bremsventils (LV) durch die Ventilanordnung (KV) mit geknickter Kennlinie hindurch zum Ablauf geht; und
das Beaufschlagen eines Bremszylinders (BV) des Wagens mit dem Ausgangsdruck der Ventilanordnung (KV) mit geknickter Kennlinie.

10. Verfahren nach Anspruch 9, das weiterhin das Bewirken eines stetigen Übergangs unter dem Schwellenwert zwischen dem Ausgangsdruck des Ventils, der in einem festen Verhältnis zum Bremssteuerdrucks (CV) am ersten Steuerzulauf steht, und einem Druck gleich dem Ausgangsdruck (C') des lastgesteuerten Bremsventils (LV) am Versorgungseingang beinhaltet.

## Revendications

1. Système de freinage de véhicule pour un wagon individuel d'un véhicule à wagons multiples ayant une ligne principale de pression de fluide de commande de freins qui relie les wagons du véhicule à wagons multiples pour commander leurs freins, le système comprenant :
une conduite principale de pression de commande (HL) pour relier le système de freinage du wagon individuel à la ligne principale de pression de fluide de commande de freins du véhicule à wagons multiples ;
un distributeur (R) ayant une entrée reliée à une conduite principale de pression de commande (HL) et produit une pression sur une sortie, laquelle pression (CV) correspond au degré désiré d'application des freins, moyennant quoi une réduction de pression dans la conduite principale de pression de commande (HL) entraîne une augmentation de la pression de sortie (CV) représentant le degré désiré d'application des freins;
une vanne commandée par la charge (LV) reliée à la sortie du distributeur et à une entrée représentant le chargement du wagon (T) et agencée pour produire une pression de freinage de sortie (C'), qui, pour un quelconque degré désiré d'application des freins (CV), est plus élevée pour des charges de wagon plus élevées ;
un cylindre de frein (BV) relié à la sortie de la vanne commandée par la charge (LV) pour recevoir la pression de freinage de sortie et appliquer au wagon une force de freinage correspondante ;
une vanne à caractéristique coudée (KV) disposée entre la vanne commandée par la charge (LV) et le cylindre de frein (BV) et également reliée à la sortie de distributeur (CV), ladite vanne à caractéristique coudée (KV) étant agencée de sorte que dans un premier état opérationnel, elle régule la pression reçue par le cylindre de frein (BV) par rapport à la sortie de pression (CV) du distributeur (R) à un rapport prédéfini, et dans un second état opérationnel, elle assure une liaison non entravée entre la vanne commandée par la charge (LV) et le cylindre de frein (BV) ;
**caractérisé en ce que** la vanne à caractéristique coudée (KV) a une entrée supplémentaire (I) reliée à la conduite principale de pression de commande (HL), et est agencée de sorte que ladite vanne à caractéristique coudée (KV) fonctionne dans le premier état opérationnel lorsque la pression dans la conduite principale de pression de commande (HL) est au-dessus d'un seuil donné, et passe en continu dudit premier état opérationnel vers ledit second état opérationnel lorsque la pression dans la conduite principale de pression de commande (HL) diminue sous le seuil.

2. Système de freinage selon la revendication 1, dans lequel le fluide est de l'air comprimé et il est en outre fourni un réservoir d'air (PV) relié au distributeur (R) et à la vanne commandée par la charge (LV) pour recevoir de l'air comprimé depuis la conduite principale de pression de commande (HL) lorsqu'un freinage n'est pas requis, et pour alimenter en air comprimé la vanne commandée par la charge (LV) lorsqu'un freinage est requis.

3. Système de freinage selon la revendication 1 ou 2, dans lequel l'entrée représentant le chargement du wagon (T) est une ligne d'air comprimé menant d'un capteur de charge ou jusqu'à des ressorts pneumatiques dans le système de suspension de wagon.

4. Dispositif de vanne à caractéristique coudée (KV) pour les freins d'un wagon individuel d'un véhicule à wagons multiples, en particulier un wagon de fret ferroviaire, ladite vanne comprenant des vannes de remplissage et d'échappement (1, 2) associées pour transformer une pression d'alimentation d'entrée (C') du dispositif de vanne (KV) en pression de sortie (C), où la vanne de remplissage (1) et la vanne d'échappement (2) fonctionnent alternativement dans des sens opposés sous l'action d'un piston différentiel (4) et d'un piston d'égalisation (7) agencé derrière le piston différentiel (4) sur un axe commun, où le piston d'égalisation (7) est précontraint par une force dans le sens d'ouverture de la vanne de remplissage (1), et où la pression de sortie (C) provenant du dispositif de vanne (KV) agit sur l'une des deux surfaces de fonctionnement du piston différentiel (4) dans le sens pour fermer la vanne de remplissage (1), alors que l'autre des deux surfaces de fonctionnement est exposée à l'effet d'une pression de commande (CV) depuis le distributeur de frein (R) ;
**caractérisé en ce que** la surface (6) du piston d'égalisation (7) sur le côté du piston différentiel (4) est exposée contre sa précontrainte à une pression de commande (HL) depuis la ligne principale de freins de train, moyennant quoi une chute de pression de commande (HL) dans la ligne principale de freins de train amène le piston différentiel (4) à se déplacer dans le sens qui ouvre la vanne de remplissage (1).

5. Dispositif de vanne selon la revendication 4, dans lequel l'aire de la surface du piston différentiel (4) qui est exposée à la pression de commande (CV) est plus petite que l'aire du piston différentiel sur lequel agit la pression de sortie (C).

6. Dispositif de vanne selon la revendication 4 ou 5, dans lequel la précontrainte du piston d'égalisation (7) est créée par un ressort de compression (9).

7. Dispositif de vanne selon la revendication 6, dans lequel un ressort de compression porte contre un corps (12) du dispositif de vanne (KV) par l'intermédiaire d'une vis de réglage (10).

8. Dispositif de vanne selon l'une quelconque des revendications 4 à 7, dans lequel la vanne inclut un boîtier,
la pression d'alimentation d'entrée (C') est appliquée à un premier orifice (D) dans le boîtier, la pression de commande (CV) est appliquée à un deuxième orifice (E) dans le boîtier, et la pression de sortie (C) apparaît à un troisième orifice (F) dans le boîtier ;
le boîtier a une première face incluant les deuxième et troisième orifices (E, F), pour une liaison de la vanne à une cloison contenant des liaisons à un distributeur de frein (R) pour alimenter en pression de commande (CV) le deuxième orifice (E) et à un cylindre de frein pour recevoir la pression de sortie depuis le troisième orifice (F) ;
le boîtier a une seconde face incluant le premier orifice (D) et un quatrième orifice (G) dans lequel le quatrième orifice (G) est relié à l'intérieur du boîtier au deuxième orifice (E), pour une liaison de la vanne à une vanne dépendante de la charge (LV) pour alimenter en pression d'alimentation d'entrée (C') le premier orifice (D) et recevoir la pression de commande (CV) depuis le deuxième orifice (E) et alimenter en pression d'alimentation d'entrée (C') le premier orifice (D) ;
l'agencement des orifices sur la première face est une image miroir de l'agencement des orifices sur la seconde face, de sorte que si la vanne était retirée de la cloison et que la vanne dépendante de la charge (LV) était directement boulonnée à sa place, la pression de commande (CV) depuis le distributeur serait encore reliée à la vanne dépendante de la charge (LV) et la pression d'entrée d'alimentation (C') serait reliée au cylindre de frein (BV) ;
le boîtier a un cinquième orifice (H) pour alimenter la pression principale de commande de freins (HL).

9. Procédé pour faire fonctionner les freins de wagons individuels d'un véhicule à wagons multiples, en particulier un wagon de fret ferroviaire, comprenant :
alimenter en pression de commande de freins (DV) obtenue par inversion d'une pression principale de ligne de commande de freins (HL) du véhicule vers une entrée de commande (I) d'un dispositif de vanne à caractéristique coudée (KV) ;
alimenter en pression de sortie (C') d'une vanne de frein commandée par la charge (LV) qui est égale à la pression de commande (CV) multipliée par un facteur proportionnel à la taille de la charge du wagon, vers une entrée d'alimentation du dispositif de vanne à caractéristique coudée (KV) ;
alimenter en pression de ligne principale de commande de freins (HL) du véhicule vers une entrée de commande supplémentaire (II) du dispositif de vanne à caractéristique coudée (KV) ;
détecter lorsque la pression sur la seconde entrée de commande est au-dessus d'un seuil, et générer, en réponse sur une sortie de la vanne, une pression qui est une proportion fixée de la pression de commande de freins (CV) sur la première entrée de commande ;
détecter lorsque la pression sur la seconde entrée de commande est au-dessous du seuil, et laisser en réponse la pression de sortie (C') de la vanne commandée par la charge (LV) appliquée à l'entrée d'alimentation passer à travers le dispositif de vanne à caractéristique coudée (KV) jusqu'à la sortie ; et
alimenter en sortie du dispositif de vanne à caractéristique coudée (KV) vers un cylindre de frein (BV) du wagon.

10. Procédé selon la revendication 9, comprenant en outre la fourniture d'une transition continue sous le seuil entre la sortie de vanne étant une pression qui est une proportion fixée de la pression de commande de freins (CV) sur la première entrée de commande et une pression égale à la pression de sortie (C') de la vanne de frein commandée par la charge (LV) appliquée à l'entrée d'alimentation.
